(19) Europäisches Patentamt
European Patent Office
Office européen des brevets

(11) **EP 1 311 123 B1**

(12) **EUROPEAN PATENT SPECIFICATION**

(45) Date of publication and mention
of the grant of the patent:
**30.01.2008 Bulletin 2008/05**

(51) Int Cl.:
*H04N 7/18* (2006.01)          *H04N 5/232* (2006.01)
*H04N 5/225* (2006.01)

(21) Application number: **02256973.5**

(22) Date of filing: **08.10.2002**

(54) **Controlling a video camera**

Steuern einer Videokamera

Commande d'une caméra vidéo

(84) Designated Contracting States:
**DE GB IT NL**

(30) Priority: **29.10.2001 KR 2001066851**

(43) Date of publication of application:
**14.05.2003 Bulletin 2003/20**

(73) Proprietor: **SAMSUNG ELECTRONICS CO., LTD.**
**Suwon-si,**
**Gyeonggi-do 442-742 (KR)**

(72) Inventor: **Cho, Jae-soo**
**Paldal-gu,**
**Suwon City,**
**Gyunggi-do (KR)**

(74) Representative: **Geary, Stuart Lloyd et al**
**Venner Shipley LLP**
**20 Little Britain**
**London EC1A 7DH (GB)**

(56) References cited:
**EP-A- 0 619 552**          **EP-A- 0 689 357**
**FR-A- 2 773 937**          **US-A- 5 760 846**

• FAVALLI L ET AL: "Object tracking and hypermedia links creation in MPEG-2 digital video sequences" CIRCUITS AND SYSTEMS, 1998. ISCAS '98. PROCEEDINGS OF THE 1998 IEEE INTERNATIONAL SYMPOSIUM ON MONTEREY, CA, USA 31 MAY-3 JUNE 1998, NEW YORK, NY, USA,IEEE, US, 31 May 1998 (1998-05-31), pages 261-264, XP010289438 ISBN: 0-7803-4455-3
• FAYMAN J A ET AL: "Zoom tracking" ROBOTICS AND AUTOMATION, 1998. PROCEEDINGS. 1998 IEEE INTERNATIONAL CONFERENCE ON LEUVEN, BELGIUM 16-20 MAY 1998, NEW YORK, NY, USA,IEEE, US, 16 May 1998 (1998-05-16), pages 2783-2788, XP010281419 ISBN: 0-7803-4300-X
• PATENT ABSTRACTS OF JAPAN & JP 1997 198969 A (NEC CORP.), 18 November 1997 (1997-11-18)

**Description**

The present invention relates to a method of controlling a video camera, the method comprising processing a video signal from a video camera to identify an moving object in the field of view of the camera and controlling the video camera so as to maintain the identified moving object in the camera's field of view.

Such a method is known from EP-A-0689357.

Generally, digital photography systems use data compression techniques to compress image data so as to record a greater number of images in the memory available and facilitate transmission of the images to a remote location. For example, a digital television transmission system compresses the image data, obtained by a camera, and transmits the compressed image signals as broadcasting signals.

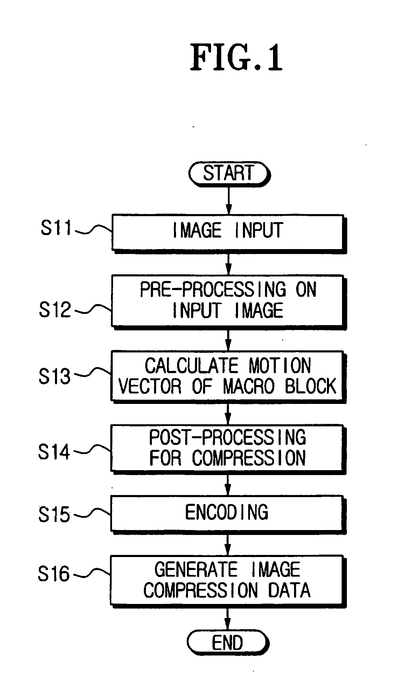

Figure 1 is a flowchart showing a conventional image compression method of an image compression and decompression system.

Referring to Figure 1, when the image data for a scene is captured by a camera is input (step S11), the image compression and decompression system performs pre-processing of the input image (step S12). That is, signal processing is performed on the raw camera output to remove noise from the input image. Then, by comparing such processed images with the preceding frames, a motion vector of a macro block is calculated (step S13). Next, post-processing is performed to compress the input images (step S14). Digital encoding is performed (step S15), and finally the image data is compressed (step S16).

The 'motion vector' of the macro block, which is used to compress the image data, indicates the direction of movement of an object in an image between two successive frames. The motion vector is represented in two dimensions, i.e. in the horizontal and vertical directions. For example, if the motion vector of a particular macro block has the values of (2, -3), it means that the particular macro block has moved by two pixels in the horizontal direction, and by -3 pixels in the vertical direction.

Through the above-described compression of data, image data can be stored and transmitted to remote locations in greater volume and at a higher speed.

In certain applications, automatic tracking systems are advantageous. Automatic tracking systems are able to control a camera to track a moving object through signal processing of the input images.

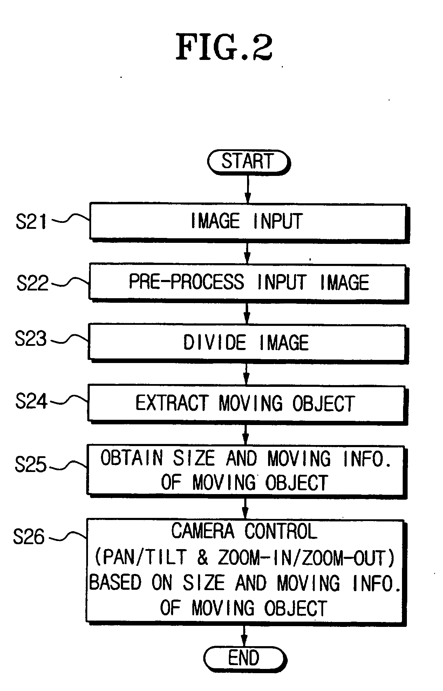

Figure 2 is a flowchart illustrating a conventional camera controlling process. When an image is input (step S21), the system pre-processes the input image (step S22). Next, the input image is divided into a plurality of areas (step S23). These areas are categorized into a background region and a motion region to extract a moving object (step S24). Then, size and motion information for the extracted moving object is obtained (step S25). The panning. tilting and zoom of the camera are controlled on the basis of the size and motion information for the extracted moving object (step S26). Through the above-described process, the moving object is automatically tracked.

Typically, automatic tracking systems use image compression algorithms, such as that described above, to reduce storage and transmission requirements. Research is currently underway to develop an image compression algorithm that would enable the transmission of the moving object, being tracked, to a remote location using the internet or a wireless communication network.

However, in conventional automatic moving object tracking systems as described above, the process of compressing the input image and the process of tracking the moving object are performed independently of each other. Because the process of compressing the input image and the process of processing the input image for camera control are currently performed separately, control units are subjected to considerable overload and unnecessary power consumption.

A method of controlling a video camera according to the present invention is characterised as recited in claim 1.

Preferably, the video signal from the camera is compressed using said motion vectors and output.

Preferably, said identifying a moving object comprises determining whether each of said motion vectors meets a movement criterion and determining a boundary encompassing a collection of macro blocks whose motion vectors meet the movement criterion. More preferably, said boundary is corresponds to the boundary of the smallest square then encompasses said collection and/or the pan and/or tilt of the camera are controlled in dependence on the position of the centre of the region defined by said boundary and/or the zoom of the camera is controlled in dependence on the size of the region defined by said boundary.

Said criterion may comprise satisfying:

$$t < \max(|V_x|, |V|_y)$$

where $V_x$ and $V_j$ are the horizontal and vertical components of a motion vector V and $t$ is a threshold value, preferably 2, or

$$t < \sqrt{V_x^2 + V_y^2}$$

where $V_x$ and $V_y$ are the horizontal and vertical components of a motion vector V and $t$ is a threshold value, preferably 2.

According to the present invention, there is provided a video system comprising a video camera and a processing apparatus connected to receive a video signal from the video camera and output control signals to the video camera, wherein the processing apparatus is configured to perform a method according to the present invention.

According to the present invention, there is also provided a signal representing control codes as recited in claim 18.

According to the present invention, there is further provided a data carrier in/on which a representation of a signal according to the present invention is recorded.

Further preferred and option features of the present invention are set forth in the dependent claims.

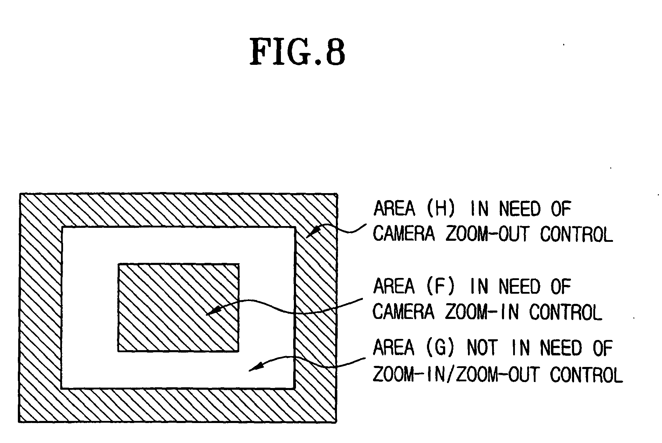

An embodiment of the present invention will now be described, by way of example, with reference to Figures 3 to 10 of the accompanying drawings, in which:

Figure 1 is a flowchart illustrating a conventional image compressing method;
Figure 2 is a flowchart illustrating a conventional method for automatically tracking a moving object using an image signal;
Figure 3 is a block diagram of an automatic moving object tracking system according to the present invention;
Figure 4 is a flowchart illustrating the operation of the automatic tracking system of Figure 3;
Figure 5 illustrates the process of determining a motion region and a motionless region from the motion vectors of macro blocks;
Figure 6 illustrates the process of estimating size and centre value of a moving object;
Figure 7 illustrates a pan/tilt control region of a camera;
Figure 8 illustrates a zoom control region of a camera; and
Figures 9 and 10 are timing diagrams showing the camera control time and the information tracking time respectively.

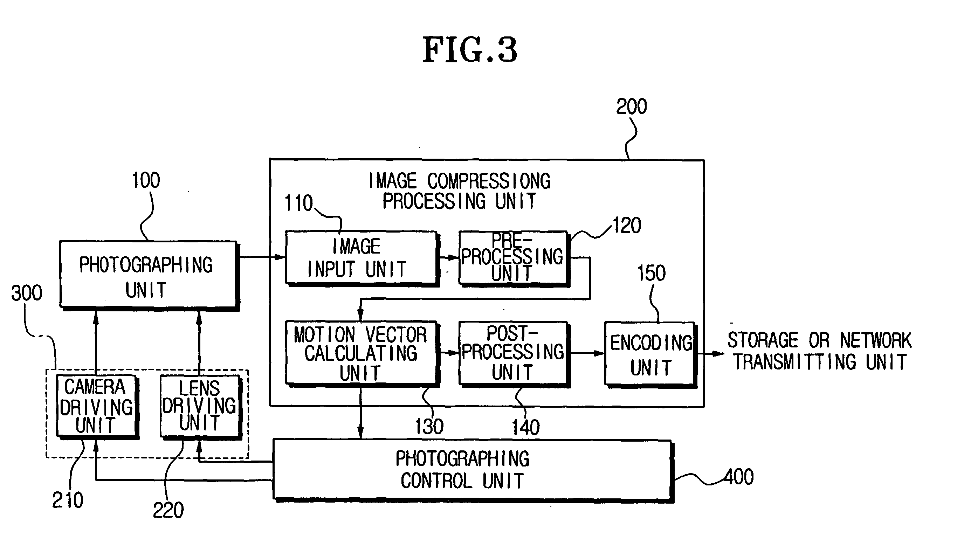

Referring to Figure 3, a moving object tracking system includes a imaging unit 100, an image compression processing unit 200, a driving unit 300 and a imaging control unit 400.

The imaging unit 100 includes a lens (not shown) and a charge coupled device (not shown), and images a monitored area to generate image signals.

The image compression processing unit 200 performs data compression in order to reduce the volume of data transmitted from the imaging unit 100, and outputs the compressed data to a storage device (not shown) or to a network transmitting device (not shown). For this purpose, the image compression processing unit 200 includes an image input unit 110 for receiving the image data from the imaging unit 100, a pre-processing unit 120 for pre-processing the input image data, a motion vector calculating unit 130 for calculating motion vectors based on the differences between the pre-processed input image data, a post-processing unit 140 for post-processing the image data for which the motion vectors have been calculated, and an encoding unit 150 for generating compressed data according to the characteristics of the post-processed image data.

The driving unit 300 drives the imaging unit 100 in response to control signals output from the imaging control unit 400. Accordingly, the driving unit 300 includes a lens driving unit 220 for adjusting the lens for pan and tilt and zoom, and a camera driving unit 210 for moving the imaging unit 100 for tracking and imaging a moving object.

The imaging control unit 400 estimates the size B and a centre value C of a moving object from the macro block motion vectors calculated by the motion vector calculating unit 130 of the image compression processing unit 200, and controls the imaging unit 100 through the driving unit 300.

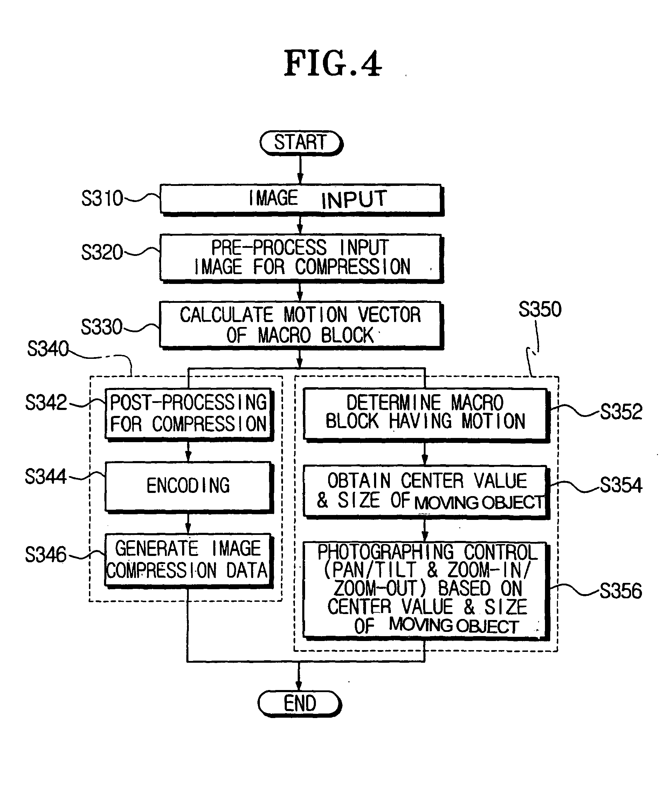

Referring to Figure 4, first, when an object is imaged by the imaging unit 100 (step S310), the pre-processing unit 120 pre-processes the input images from the image input unit 200 (step S320). After the pre-processing, the current image frame is compared with the preceding frame and thus, macro block motion vectors are calculated by the motion vector calculating unit 130 (step S330).

Compressed image data for the input images, for which the motion vectors have been calculated, is generated on the basis of the binary data array characteristic of the input images (step S340). In other words, after the compression-related post-processing by the post-processing unit 140 (step S342), the post-processed input images are coded in the encoding unit 150, and as a result, the compressed data is generated (step S346).

The imaging control unit 400 controls the imaging unit 100 by obtaining the information about the moving object, based on the motion vectors calculated by the motion vector calculating unit 130, and outputting a control signal based on the obtained information (step S350).

The process of controlling the imaging unit 100 using the calculated motion vectors will now be described in greater detail.

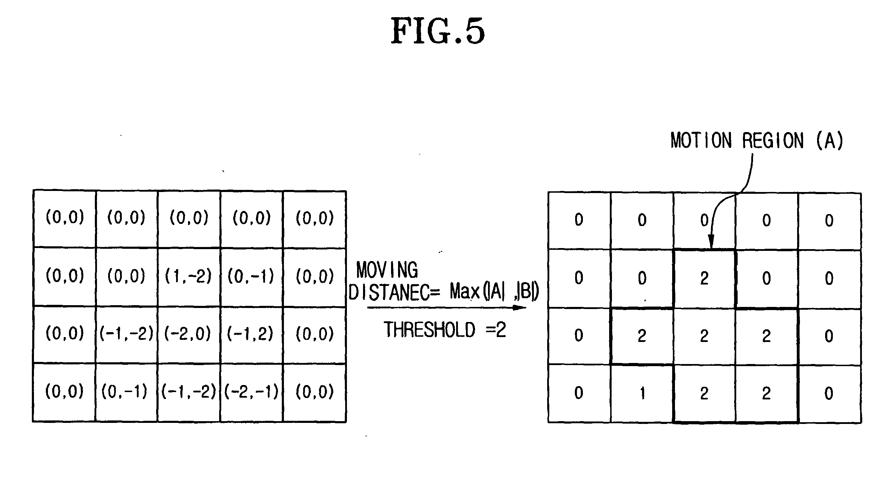

First, the imaging control unit 400 receives the motion vectors, calculated by the motion vector calculating unit 130, and identifies a moving region and a static region of the input image (step S352). To determine the moving region, the imaging control unit 400 calculates a movement distance for the moving object from the macro block motion vectors (Figure 5), and compares the calculated movement distance with a threshold.

The movement distance of a macro block is obtained by the following equation:

$$MOVEMENT\ DISTANCE = MAX(|A|, |B|) \quad \text{Eq. (1)}$$

where A is the horizontal component of a motion vector and B is the vertical component of the motion vector.

Referring to Figure 5, if the macro block movement distance is greater than the threshold '2', the macro block is determined to be a moving macro block. If, however, the movement distance of the macro block is less than the threshold 2, the macro block is determined to be a static macro block. The right-hand of Figure 5 shows the moving region A determined by the comparison of the threshold and the movement distance of the macro blocks of the image.

The movement distance of the macro block can be expressed in many forms, such as following equation, for example.

$$MOVEMENT\ DISTANCE = \sqrt{A^2 + B^2} \qquad \text{Eq. (2)}$$

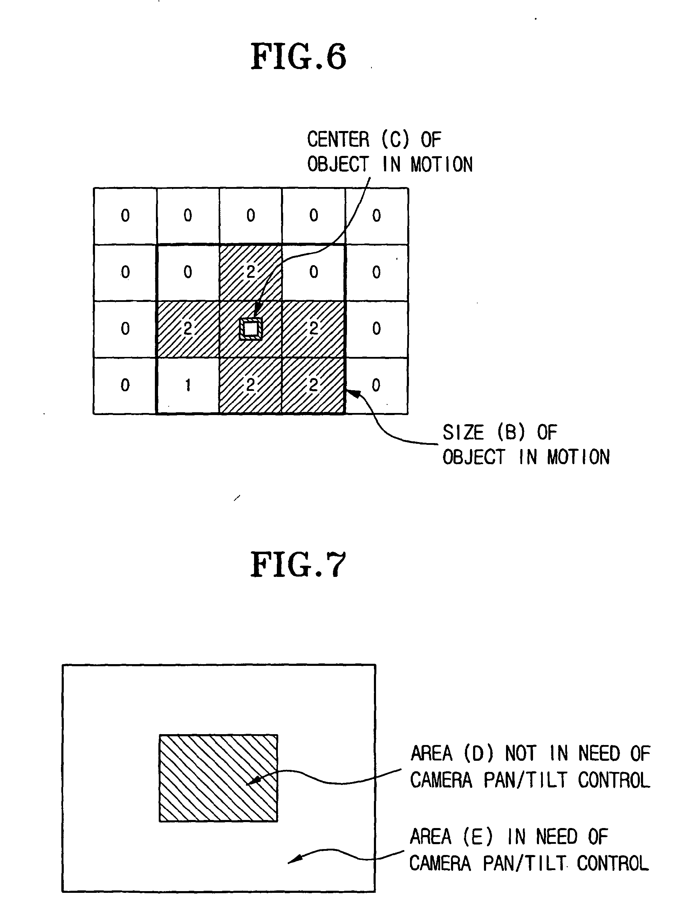

When the moving and static regions of the input image have been determined, the imaging control unit 400 estimates the size B and centre value C of the moving object from the moving region A. As shown in Figure 6, the size B of the moving object is determined by determining the smallest square that can encompass the moving region. The centre value C of the moving object is determined by determining the middle of the square encompassing the moving region.

Referring back to Figure 4, the imaging control unit 400 controls the imaging unit 100 by outputting to the driving unit 300 an imaging control signal in dependence on the size B and the centre value C of the moving object (step S356). In order to maintain a constant occupancy rate for the moving object in the image plane, according to the size B of the moving object, a zoom control signal is output to the lens driving unit 220 to control the zoom of the imaging unit 100. Furthermore, in order to align the centre of the moving object with the centre of the image plane according to the centre value B of the moving object, a pan/tilt control signal is output to the lens driving unit 220 to control the pan and tilt of the imaging unit 100. Also, in order to prevent shaky movement from occurring on the screen due to over-control, the pan and tilt control of the imaging unit 100 is only performed when the center value C of the moving object is located in an off-area E outside of a predetermined central area D (Figure 7). The zoom control of the imaging unit 100 is also performed in a manner such that zooming-in is performed when the centre value C of the moving object is in a central area F while zooming-out is performed when the centre value C of the moving object is in a peripheral region H. No zooming is performed if the centre value C of the moving object is in an intermediate area G between the central and peripheral areas F, H.

The imaging control unit 400 can set the area within the square as a tracking window for tracking the movement of the moving object, and track the moving object by moving the tracking window to a moving object's location. The moving object's location is estimated based on the preceding frames within the square. When the centre value of the tracking window moves outside the input image or a central part thereof, the shooting direction of the imaging unit 100 is controlled, according to the estimated information of the tracking window, by a control signal output to the camera driving unit 31 to shift the direction of the camera.

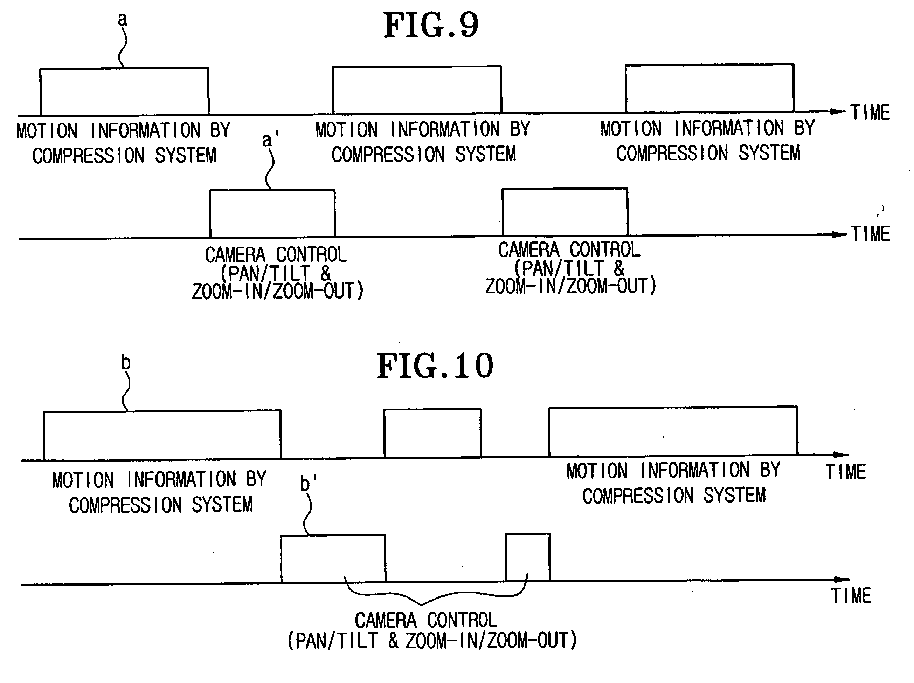

During the control of the camera, there are motion vectors of the input image that are generated by the movement of the camera, and not by the actual movement of the object. Such spurious motion vectors are preferably not used. Accordingly, time-division is utilized such that the camera controlling time *a'* and the estimating time *a* for the size and centre value of the moving object are performed as shown in the timing view of Figure 9.

Figure 10 is a timing view showing an alternative distribution of the time for moving object information processing *b* and camera control *b'*.

As described above, with a camera controlling method using the compression-related information according to the present invention, significant advantages are realized. As the basic information for object tracking is obtained from the image compression system, the load to the central processing unit is significantly reduced from that of the conventional moving object tracking system. Also, because the image compressing function and the photographing controlling function are combined with each other, cost-effectiveness is achieved.

Of course it will be apparent to those of skill in the art that the above described concepts can be implemented in a software embodiment. Such an embodiment comprises a computer readable medium of instructions for controlling a camera to track and photograph a moving object based on the information generated in the process of input image compression, as described above.

**Claims**

1. A method of controlling a video camera, the method comprising:

   processing a video signal from a video camera (100) to identify a moving object in the field of view of the camera (100); and
   controlling the video camera (100) so as to maintain the identified moving object in the camera's field of view,

   wherein the processing of a video signal to identify a moving object comprises:

   generating motion vectors for macro blocks of a video frame from the camera (100); and
   identifying a moving object on the basis of said motion vectors; and

   and wherein the method comprises:

   determining a motion region and a motionless region of an input image photographed by the camera based on a motion vector of a macro block;
   estimating a centre value and the size of a moving object from the motion region; and
   controlling the camera so that the camera tracks and photographs the moving object based on the estimated centre value and size,
   wherein the camera controlling step controls a pan/tilt of the camera according to the estimated centre value of the moving object, and
   wherein the pan/tilt control of the camera is performed only when the centre value of the moving object exists outside of a preset area of the input image.

2. A method according to claim 1, including compressing the video signal from the camera (100) using said motion vectors and outputting the resulting compressed video signal.

3. A method according to claim 1 or 2, wherein said identifying a moving object comprises determining whether each of said motion vectors meets a movement criterion and determining a boundary encompassing a collection of macro blocks whose motion vectors meet the movement criterion.

4. A method according to claim 4, wherein said boundary corresponds to the boundary of the smallest square then encompasses said collection.

5. A method according to claim 3 or claim 4, comprising controlling the zoom of the camera in dependence on the size of the region defined by said boundary.

6. A method according to any one of claims 3 to 5, wherein said criterion comprises satisfying:

$$t < \max(|V_x|, |V|_y)$$

where $V_x$ and $V_y$ are the horizontal and vertical components of a motion vector $V$ and $t$ is a threshold value, preferably 2.

7. A method according to any one of claims 3 to 5, wherein said criterion comprises satisfying:

$$t < \sqrt{V_x^2 + V_y^2}$$

where $V_x$ and $V_y$ are the horizontal and vertical components of a motion vector $V$ and $t$ is a threshold value, preferably 2.

8. A method according to claim 1, wherein the identifying of a moving object on the basis of said motion vectors comprises the steps of:

   calculating the movement distances of the macro blocks; and
   determining the motion region and the motionless region according to comparisons between the calculated movement distances of the macro blocks and a threshold.

9. A method according to claim 8, comprising calculating the movement distance as the greater of the absolute change in a first direction and the absolute change in a second direction.

10. A method according to claim 8, comprising calculating the movement distance as the square root of the sum of the square of the change in a first direction and the square of the change in a second direction.

11. A method according to claim 9 or 10, wherein the first direction is horizontal and the second direction is vertical.

12. A method according to claim 8, comprising determining the size of the moving object as the area of a square that surrounds the boundary of the motion region.

13. A method according to claim 1, further comprising the steps of:

   setting the area within the square as a tracking window for tracking the moving object,
   estimating a moved to location for the moving object based on preceding frames within the square, and
   moving the tracking window according to the estimated moved to location.

14. A method according to any of claims 1 to 4, wherein the camera controlling step controls zooming of the camera according the estimated size of the moving object.

15. A method according to claim 14, wherein the controlling step is performed such that zooming in is performed when the moving object exists inside of the preset area of the input image, while the zooming out is performed when the moving object exists outside of the preset area of the input image.

16. A method according to any preceding claim, wherein the controlling step performed such that the estimation of the centre value of the moving object and the estimation of the size of the moving object are performed on a time-divisional basis.

17. A video system comprising a video camera (100) and a processing apparatus (200) connected to receive a video signal from the video camera (100) and output control signals to the video camera (100), wherein the processing apparatus (200) is configured to perform a method according to any preceding claim.

18. A signal representing control codes which when executed by computer apparatus control it to perform the method of any of claims 1 to 16.

19. A data carrier in/on which a representation of a signal according to claim 18 is recorded.

**Patentansprüche**

1. Verfahren zur Steuerung einer Videokamera, wobei das Verfahren umfasst:

   Verarbeiten eines Videosignals von einer Videokamera (100), um ein sich bewegendes Bild im Sichtfeld der Kamera (100) zu identifizieren; und
   Steuern der Videokamera (100), um das identifizierte sich bewegende Objekt im Sichtfeld der Kamera zu behalten,

   wobei das Verarbeiten eines Videosignals zur Identifizierung eines sich bewegenden Objekts umfasst:

Erzeugen eines Bewegungsvektors für Makroblöcke eines Videoframes von der Kamera (100); und
Identifizieren eines sich bewegenden Objekts auf der Basis des Bewegungsvektors; und

wobei das Verfahren umfasst:

Bestimmen einer Bewegungsregion und einer unbewegten Region eines Eingabebildes, das von der Kamera auf der Basis eines Bewegungsvektors eines Makroblocks fotografiert wurde;
Einschätzen eines Mittelwertes und der Größe des sich bewegenden Objektes von der Bewegungsregion; und
Steuern der Kamera, sodass die Kamera auf der Basis des geschätzten Mittelwertes und der Größe das sich bewegende Objekt verfolgt und fotografiert,
wobei der Kamerasteuerungsschritt einen Schwenk/eine Neigung der Kamera nach dem geschätzten Mittelwert des sich bewegenden Objekts steuert, und
wobei der Schwenk/die Neigung der Kamera nur dann durchgeführt wird, wenn der Mittelwert des sich bewegenden Objekts außerhalb eines vorher festgelegten Bereichs des Eingabebildes vorhanden ist.

2. Verfahren nach Anspruch 1, umfassend das Komprimieren des Videosignals von der Kamera (100) unter Benutzung der Bewegungsvektoren und Ausgeben des anfallenden komprimierten Videosignals.

3. Verfahren nach Anspruch 1 oder 2, wobei das Identifizieren eines sich bewegenden Objekts das Bestimmen, ob jeder der Bewegungsvektoren einem Bewegungskriterium entspricht, und das Bestimmen einer Grenze, die eine Sammlung von Makroblöcken, deren Bewegungsvektoren dem Bewegungskriterium entsprechen, abgrenzen, umfasst.

4. Verfahren nach Anspruch 4, wobei die Grenze der Grenze des kleinsten Quadrats entspricht und dann diese Sammlung abgrenzt.

5. Verfahren nach Anspruch 3 oder Anspruch 4, umfassend das Steuern der Fokussierung der Kamera in Abhängigkeit der Größe der Region, die durch die Grenze definiert ist.

6. Verfahren nach einem der Ansprüche 3 bis 5, wobei das Kriterium umfasst, dass Folgendem entsprochen wird:

$$t < \max(|V_x|, |V_y|)$$

wobei $V_x$ und $V_y$ horizontale und vertikale Bestandteile eines Bewegungsvektors $V$ sind und $t$ ein Grenzwert, vorzugsweise 2 ist.

7. Verfahren nach einem der Ansprüche 3 bis 5, wobei das Kriterium umfasst, dass Folgendem entsprochen wird:

$$t < \sqrt{V_x^2 + V_y^2}$$

wobei $V_x$ und $V_y$ horizontale und vertikale Bestandteile eines Bewegungsvektors $V$ sind und $t$ ein Grenzwert, vorzugsweise 2 ist.

8. Verfahren nach Anspruch 1, wobei das Identifizieren eines sich bewegenden Objekts auf der Basis des Bewegungsvektors die Schritte umfasst:

Berechnen der Bewegungsentfernungen der Makroblöcke; und
Bestimmen der Bewegungsregion und der unbewegten Region nach Vergleichen zwischen den berechneten Bewegungsentfernungen der Makroblöcke und einem Grenzwert.

9. Verfahren nach Anspruch 8, umfassend das Berechnen der Bewegungsentfernung als die größere der absoluten Änderung in eine erste Richtung der absoluten Änderung in eine zweite Richtung.

10. Verfahren nach Anspruch 8, umfassend das Berechnen der Bewegungsentfernung als Quadratwurzel der Summe des Quadrats der Änderung in eine erste Richtung und des Quadrats der Änderung in eine zweite Richtung.

11. Verfahren nach Anspruch 9 oder 10, wobei die erste Richtung horizontal ist und die zweite Richtung vertikal ist.

12. Verfahren nach Anspruch 8, umfassend das Bestimmen der Größe des sich bewegenden Objekts als der Bereich eines Quadrates, das die Grenze der Bewegungsregion umgibt.

13. Verfahren nach Anspruch 1, ferner umfassend die Schritte:

Einstellen des Bereichs innerhalb des Quadrats als ein Verfolgungsfenster zum Verfolgen des sich bewegenden Objekts,
Einschätzen einer Stelle, zu der bewegt wurde, für das sich bewegende Objekt auf der Basis von vorhergehenden Frames innerhalb des Quadrats, und
Bewegen des Verfolgungsfensters nach der Stelle, zu der bewegt wurde.

14. Verfahren nach einem der Ansprüche 1 bis 4, wobei der Kamerasteuerungsschritt das Fokussieren der Kamera nach der geschätzten Größe des sich bewegenden Objekts steuert.

15. Verfahren nach Anspruch 14, wobei der Steuerschritt derart durchgeführt wird, dass das Heranzoomen durchgeführt wird, wenn sich das sich bewegende Objekt innerhalb des vorher festgelegten Bereichs befindet, während das Herauszoomen durchgeführt wird, wenn sich das sich bewegende Objekt außerhalb des vorher festgelegten Bereichs des Eingabebilds befindet.

16. Verfahren nach einem der vorhergehenden Ansprüche, wobei der Steuerschritt derart durchgeführt wird, dass die Einschätzung des Mittelwertes des sich bewegenden Objekts und die Einschätzung der Größe des sich bewegenden Objekts auf einer Zeitmultiplexbasis durchgeführt werden.

17. Videosystem, umfassend eine Videokamera (100) und ein Verarbeitungsgerät (200), die verbunden sind, um ein Videosignal von der Videokamera (100) zu erhalten und Steuersignale an die Videokamera (100) auszugeben, wobei das Verarbeitungsgerät (200) derart konfiguriert ist, dass es ein Verfahren nach einem der vorhergehenden Ansprüche durchführen kann.

18. Signal, das Steuercodes darstellt, die bei der Ausführung durch das Computergerät dieses steuern, um das Verfahren nach einem der Ansprüche 1 bis 16 durchzuführen.

19. Datenträger, in/auf dem eine Darstellung eines Signals nach Anspruch 18 aufgezeichnet ist.

**Revendications**

1. Procédé de commande d'une caméra vidéo, le procédé comportant les étapes consistant à :

traiter un signal vidéo d'une caméra vidéo (100) en vue d'identifier un objet en mouvement dans le champ de vision de la caméra vidéo (100) ; et
commander la caméra vidéo (100) afin de maintenir l'objet en mouvement identifié dans le champ de vision de la caméra,

dans lequel le traitement d'un signal vidéo en vue d'identifier un objet en mouvement comporte les étapes consistant à :

générer des vecteurs de mouvement pour des macroblocs d'une trame vidéo à partir de la caméra (100) ; et
identifier un objet en mouvement sur la base desdits vecteurs de mouvement ; et

dans lequel le procédé comporte les étapes consistant à :

déterminer une zone de mouvement et une zone sans mouvement d'une image d'entrée photographiée par la caméra sur la base d'un vecteur de mouvement d'un macrobloc ;

estimer une valeur centrale et la taille d'un objet en mouvement à partir de la zone de mouvement ; et

commander la caméra vidéo de sorte que la caméra suive et photographie l'objet en mouvement sur la base de la valeur centrale et de la taille estimées,

dans lequel l'étape de commande de caméra commande un panoramique horizontal/vertical de la caméra selon la valeur centrale estimée de l'objet en mouvement, et

dans lequel la commande de panoramique horizontal/vertical de la caméra est exécutée uniquement lorsque la valeur centrale de l'objet en mouvement existe en dehors de la zone prédéterminée de l'image d'entrée.

2. Procédé selon la revendication 1, comportant les étapes consistant à compresser le signal vidéo de la caméra (100) au moyen desdits vecteurs de mouvement et à générer ledit signal vidéo résultant.

3. Procédé selon la revendication 1 ou 2, dans lequel ladite étape consistant à identifier un objet en mouvement comporte les étapes consistant à déterminer si chacun desdits vecteurs de mouvement correspond à un critère de mouvement et à déterminer une frontière englobant un ensemble de macroblocs dont les vecteurs de mouvement correspondent au critère de mouvement.

4. Procédé selon la revendication 4, dans lequel ladite frontière correspond à la frontière du plus petit carré qui englobe ledit ensemble.

5. Procédé selon la revendication 3 ou la revendication 4, comportant l'étape consistant à commander le zoom de la caméra selon la taille de la zone définie par ladite frontière.

6. Procédé selon l'une quelconque de revendications 3 à 5, dans lequel ledit critère doit satisfaire à :

$$t < \max(|V_x|,\ |V_y|)$$

où $V_x$, et $V_y$ sont les composantes horizontales et verticales d'un vecteur de mouvement $V$ et $t$ est une valeur seuil, de préférence égale à 2.

7. Procédé selon l'une quelconque de revendications 3 à 5, dans lequel ledit critère doit satisfaire à :

$$t < \sqrt{V_x{}^2 + V_y{}^2}$$

où $V_x$, et $V_y$, sont les composantes horizontales et verticales d'un vecteur de mouvement $V$ et $t$ est une valeur seuil, de préférence égale à 2.

8. Procédé selon la revendication 1, dans lequel l'identification d'un objet en mouvement sur la base desdits vecteurs de mouvement comporte les étapes consistant à :

calculer les distances de mouvement des macroblocs ; et

déterminer la zone de mouvement et la zone sans mouvement selon des comparaisons entre les distances de mouvement calculées des macroblocs et un seuil.

9. Procédé selon la revendication 8, comportant l'étape consistant calculer la distance de mouvement comme la plus grande valeur de la variation absolue dans une première direction et de la variation absolue dans une seconde direction.

10. Procédé selon la revendication 8, comportant l'étape consistant à calculer la distance de mouvement comme la racine carrée de la somme du carré de la variation dans une première direction et du carré de la variation dans une seconde direction.

11. Procédé selon la revendication 9 ou 10, dans lequel la première direction est horizontale et la seconde direction est verticale.

**12.** Procédé selon la revendication 8, comportant l'étape consistant à déterminer la taille de l'objet en mouvement comme la zone d'un carré qui entoure la frontière de la zone de mouvement.

**13.** Procédé selon la revendication 1, comportant en outre les étapes de consistant à :

définir la zone à l'intérieur du carré en tant que fenêtre de suivi pour suivre l'objet en mouvement, estimer un emplacement de déplacement pour l'objet en mouvement sur la base des trames précédentes à l'intérieur du carré, et déplacer la fenêtre de suivi selon l'emplacement de déplacement estimé.

**14.** Procédé selon l'une quelconque des revendications 1 à 4, dans lequel l'étape de commande de caméra commande le zoom de la caméra selon la taille estimée de l'objet en mouvement.

**15.** Procédé selon la revendication 14, dans lequel l'étape de commande est exécutée de sorte que le zoom avant soit exécuté lorsque l'objet en mouvement est présent à l'intérieur de la zone prédéterminée de l'image d'entrée, et que le zoom arrière soit exécuté lorsque l'objet en mouvement est présent en dehors de la zone prédéterminée de l'image d'entrée.

**16.** Procédé selon l'une quelconque des revendications précédentes, dans lequel l'étape de commande est exécutée de sorte que l'estimation de la valeur centrale de l'objet en mouvement et l'estimation de la taille de l'objet en mouvement soient exécutées sur une base temporelle.

**17.** Système vidéo comportant une caméra vidéo (100) et un dispositif de traitement (200) connecté en vue de recevoir un signal vidéo de la caméra vidéo (100) et en vue de générer des signaux de commande à la caméra vidéo (100), dans lequel le dispositif de traitement (200) est configuré pour exécuter un procédé selon l'une quelconque des revendications précédentes.

**18.** Signal représentant des codes de commande, qui, lorsqu'exécutés par un ordinateur, commandent le signal en vue d'exécuter le procédé selon l'une quelconque des revendications 1 à 16.

**19.** Support de données dans lequel / sur lequel une représentation d'un signal selon la revendication 18 est enregistrée.

# FIG.1

START

S11 — IMAGE INPUT

S12 — PRE-PROCESSING ON INPUT IMAGE

S13 — CALCULATE MOTION VECTOR OF MACRO BLOCK

S14 — POST-PROCESSING FOR COMPRESSION

S15 — ENCODING

S16 — GENERATE IMAGE COMPRESSION DATA

END

# FIG.2

```
                    ┌─────────────┐
                    │    START    │
                    └──────┬──────┘
                           │
                           ▼
S21 ──┌──────────────────────────────────────────┐
      │              IMAGE  INPUT                  │
      └──────────────────┬───────────────────────┘
                         │
                         ▼
S22 ──┌──────────────────────────────────────────┐
      │          PRE-PROCESS  INPUT  IMAGE         │
      └──────────────────┬───────────────────────┘
                         │
                         ▼
S23 ──┌──────────────────────────────────────────┐
      │              DIVIDE  IMAGE                 │
      └──────────────────┬───────────────────────┘
                         │
                         ▼
S24 ──┌──────────────────────────────────────────┐
      │          EXTRACT  MOVING  OBJECT           │
      └──────────────────┬───────────────────────┘
                         │
                         ▼
S25 ──┌──────────────────────────────────────────┐
      │      OBTAIN SIZE AND MOVING INFO.          │
      │          OF MOVING OBJECT                  │
      └──────────────────┬───────────────────────┘
                         │
                         ▼
S26 ──┌──────────────────────────────────────────┐
      │            CAMERA CONTROL                  │
      │   (PAN/TILT & ZOOM-IN/ZOOM-OUT)            │
      │   BASED ON SIZE AND MOVING INFO.           │
      │          OF MOVING OBJECT                  │
      └──────────────────┬───────────────────────┘
                         │
                         ▼
                  ┌─────────────┐
                  │     END     │
                  └─────────────┘
```

# FIG.3

EP 1 311 123 B1

# FIG.4

START

S310 — IMAGE INPUT

S320 — PRE-PROCESS INPUT IMAGE FOR COMPRESSION

S330 — CALCULATE MOTION VECTOR OF MACRO BLOCK

S340

S350

S342 — POST-PROCESSING FOR COMPRESSION

S352 — DETERMINE MACRO BLOCK HAVING MOTION

S344 — ENCODING

S354 — OBTAIN CENTER VALUE & SIZE OF MOVING OBJECT

S346 — GENERATE IMAGE COMPRESSION DATA

S356 — PHOTOGRAPHING CONTROL (PAN/TILT & ZOOM-IN/ ZOOM-OUT) BASED ON CENTER VALUE & SIZE OF MOVING OBJECT

END

# FIG.5

EP 1 311 123 B1

MOTION REGION (A)

| (0,0) | (0,0) | (0,0) | (0,0) | (0,0) |
|-------|-------|-------|-------|-------|
| (0,0) | (0,0) | (1,-2) | (0,-1) | (0,0) |
| (0,0) | (-1,-2) | (-2,0) | (-1,2) | (0,0) |
| (0,0) | (0,-1) | (-1,-2) | (-2,-1) | (0,0) |

MOVING
DISTANEC= Max(|A|,|B|)

THRESHOLD =2

| 0 | 0 | 0 | 0 | 0 |
|---|---|---|---|---|
| 0 | 0 | 2 | 0 | 0 |
| 0 | 2 | 2 | 2 | 0 |
| 0 | 1 | 2 | 2 | 0 |

# FIG.6

CENTER (C) OF
OBJECT IN MOTION

| 0 | 0 | 0 | 0 | 0 |
|---|---|---|---|---|
| 0 | 0 | 2 | 0 | 0 |
| 0 | 2 | □ | 2 | 0 |
| 0 | 1 | 2 | 2 | 0 |

SIZE (B) OF
OBJECT IN MOTION

# FIG.7

AREA (D) NOT IN NEED OF
CAMERA PAN/TILT CONTROL

AREA (E) IN NEED OF
CAMERA PAN/TILT CONTROL

# FIG.8

AREA (H) IN NEED OF
CAMERA ZOOM-OUT CONTROL

AREA (F) IN NEED OF
CAMERA ZOOM-IN CONTROL

AREA (G) NOT IN NEED OF
ZOOM-IN/ZOOM-OUT CONTROL

# FIG.9

a

MOTION INFORMATION BY
COMPRESSION SYSTEM

MOTION INFORMATION BY
COMPRESSION SYSTEM

MOTION INFORMATION BY
COMPRESSION SYSTEM

TIME

a'

CAMERA CONTROL
(PAN/TILT &
ZOOM-IN/ZOOM-OUT)

CAMERA CONTROL
(PAN/TILT &
ZOOM-IN/ZOOM-OUT)

TIME

# FIG.10

b

MOTION INFORMATION BY
COMPRESSION SYSTEM

MOTION INFORMATION BY
COMPRESSION SYSTEM

TIME

b'

CAMERA CONTROL
(PAN/TILT & ZOOM-IN/ZOOM-OUT)

TIME

EP 1 311 123 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0689357 A